(19) Europäisches Patentamt
European Patent Office
Office européen des brevets

(11) **EP 3 540 543 A1**

(12) # EUROPEAN PATENT APPLICATION

(43) Date of publication:
**18.09.2019 Bulletin 2019/38**

(51) Int Cl.:
**G05B 23/02** (2006.01)

(21) Application number: **18382177.6**

(22) Date of filing: **16.03.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Airbus Operations, S.L.U.
28906 Getafe (Madrid) (ES)**

(72) Inventor: **GARCÍA PÉREZ, José María
28906 Getafe-Madrid (ES)**

(74) Representative: **ABG Intellectual Property Law,
S.L.
Avenida de Burgos, 16D
Edificio Euromor
28036 Madrid (ES)**

(54) **SYSTEM AND METHOD FOR EVENTS DETECTION**

(57) The present invention provides a system adapted to detect an event in a structure, the structure in turn comprising at least a component, an assembly and a method for detecting such an event in a structure, the events being alterations in the expected behaviour of a component, in order to take them into account when considering maintenance tasks of the structure.

FIG. 1c

EP 3 540 543 A1

## Description

## TECHNICAL FIELD OF THE INVENTION

The present invention belongs to the field of structures, and particularly, it belongs to the field of monitoring the state of such structure, or a component thereof, to characterize its capacity to serve the intended purpose.

In particular, the invention provides a system, an assembly and a method for detecting and alerting of alterations in the expected behaviour thereof, in order to take it into account when considering maintenance tasks.

## BACKGROUND OF THE INVENTION

One of the most representative roadmaps in engineering nowadays is the development of systems, structures and parts which are guaranteed to safely operate insofar complies with an agreed maintenance routine. Therefore, maintenance tries to uphold the default or design conditions over the lifetime of such system, structure or part.

Maintenance, in a broad sense, may include tasks such as inspection, reformation, repair, or replacement of parts or components, which are to be performed during its lifetime. This comes from the inherent degradation in their performances resulting in an alteration in their expected behaviour caused by a deviation in their default or design conditions. As a rule, that deviation is normally settled as exceeding a certain pre-established limit. This is sometimes referred so as to fail, or being proximate to fail safeguarded by a safety margin.

Historically, only compliance with the scheduled maintenance tasks ensured that those parts or systems serve their intended purpose for a delimited lifetime. Nevertheless, maintenance tasks usually require stopping or even turning off the system to allow carrying out the activities which may arise some drawbacks, delays and low production rates.

Furthermore, many parts or systems which must be replaced according to the scheduled maintenance may already fail or be damaged (having exceeded long before the pre-established limit) because of unnoticed malfunctions which rapidly escalate. On the contrary, other components may have a residual lifetime which poses its replacement unnecessary.

Thus, scheduled maintenance obliges to gather maintenance tasks to be performed over components whose pre-established limit is expected to be exceeded simultaneously or very close. Hence, carrying out unnecessary maintenance tasks in healthy components, and wasting others with a residual lifetime results in an inefficient resources use.

Although maintenance is common in any industry, all the above is emphasized in aeronautics since the maintenance of aircraft is highly regulated. Therefore a substantial amount of expensive parts and components are intentionally wasted in order to comply with the scheduled maintenance tasks.

## SUMMARY OF THE INVENTION

The present invention provides a solution for the aforementioned problems, by a system adapted to detect an event in a structure according to claim 1, an assembly according to claim 9 and a method for detecting an event in a structure according to claim 16. In dependent claims, preferred embodiments of the invention are defined.

In a first inventive aspect, the invention provides a *system adapted to detect an event in a structure, the structure in turn comprising at least a component, wherein an event is any alteration in the expected behaviour of a component, the system comprising:*

- *at least one sensor configured to be located on the structure, the sensor adapted to acquire data from the structure,*
- *a data analysis module configured to receive data from the at least one sensor, wherein the data analysis module comprises a database hosting known events, each known event related with a particular alteration in the expected behaviour of a component, and*
- *warning means,*

*wherein the data analysis module is configured to evaluate the acquired data received from the at least one sensor, the evaluation being performed by comparison with the known events hosted in the database, and detect an event according to the performed evaluation, and wherein the warning means are configured to inform a user of the detected event.*

Throughout this entire document, a structure will be understood as comprising at least a component which may suffer a malfunction, and thus a variation in its behaviour resulting in an alteration of the expected behaviour. At an end, this variation may result in failing or being proximate to fail. The mentioned variation of the behaviour of a component is associated with a particular event.

It is to be noted that, although an event is named as any alteration in the expected behaviour of a component, the detection of said event is performed for the whole structure on which the sensor in located. This gives rise to the fact that different components may be mutually influenced in their behaviours, and therefore an event detected for the whole structure can be inferred to a particular component.

The at least one sensor present in the system is intended to be located on the mentioned structure in order to acquire data from said structure, and thus from the at least one component being part of the structure. The data acquired by each sensor is outputted by it as an entry of information to be processed by the data analysis module. Preferably, said output is in the form of a signal.

The data analysis module can be located either along with the monitored structure or separated from it.

Besides, the database present in the data analysis module is a set of data which is associated with one or various known events, said data configuring mathematical models which will be used in the evaluation performed by the data analysis module.

A mathematical model is configured by mathematical elements, which are related between them by means of mathematical operators. The combination of such elements with such mathematical operators is what defines a particular mathematical model, which is stored in the database.

Such specific mathematical operators and mathematical elements are also stored in the database, and are applied (in the form of a particular mathematical model specified for at least one event) to any entry received in the data analysis module from the at least one sensor of the system.

These mentioned mathematical models, contained in the database and related with one or more known events, provide a result according to the mentioned entry of information which comes from the at least one sensor.

As mentioned, data acquired by a sensor is related to the behaviour of a component. Therefore, data related to a component whose expected behaviour is acknowledged as altered is used to identify and categorize events as known events. Hence, mathematical models are to be built establishing an accurate relationship between such known events and their associated data acquired by the at least one sensor.

This step is the *so-called* training phase is performed deferred in time, as the structure is operated and the amount of acquired data increases. This additional amount of data used for the training phase will hereinafter be named as training acquired data. As a consequence, the mentioned mathematical elements, or the mathematical model itself, may be tuned-up to better predict the known event under consideration.

Therefore, mathematical elements of the mathematical model are automatically adjusted by means of the data analysis module in the training phase, wherein entries (particularly the sensor acquired data) are introduced in the data analysis module which provides acknowledged outputs and allow the definition of additional entries which validate the corresponding mathematical model with every precise event.

Furthermore, as acquired data increases, new events may be known and therefore new mathematical models may be formed by their associated data. This data is afterwards also hosted in the database of the data analysis module ensuring its implementation.

Then, the data analysis module is ready to perform an evaluation of the acquired data, by the comparison of the mentioned entries from the at least one sensor with the mathematical elements and operators of the mathematical model, hosted in the database. The result of the mentioned comparison of the acquired information and the available data present in the database according to the corresponding mathematical model provides a result. Said result is evaluated thus providing an output corresponding to the eventual detection of an event.

It is to be noted that the mentioned mathematical models comprise any type of model which allows the attainment of an event based on the entries provided by the at least one sensor present in the system. Preferably, the considered events are detected by means of a linear mathematical model, for example:

$$y = W \cdot x + b,$$

wherein y is the result provided by the model, x the introduced entries, which are part of the sensor acquired data, and 'W, b' are particular mathematical elements of each model and '·, +' are mathematical operators of such model which provide a relationship for elements 'W, b' of the model. The present combination of elements 'W, b' with the operators '·, +' is what gives rise to the linear mathematical model shown.

Every type of event can be related with the same or different mathematical model, whereas the same type of event may be associated with the same mathematical model although performed by means of different mathematical elements or mathematical operators.

Additionally, a mathematical model may be further developed with additional training acquired data. This implies that the mathematical elements or mathematical operators considered for a particular mathematical model may evolve in order to provide more accurate mathematical elements which better adjust to the corresponding event based on the quantity of entries or acquired data from the at least one sensor of the system.

Preferably, each mathematical model, or mathematical elements thereof, correspond to different types of known events which are considered for being detected by the present system, and therefore acquires the needed data from the structure by means of a particular sensor.

Advantageously, the detection of an event can be achieved by acquiring data from the structure by means of any type of sensor, taking into account that said sensor shall be affected by the event which is to be detected in order to provide the mathematical model with accurate data.

Given that the existence of a known event is a priori undesirable, the system according to the invention provides a continuous tracking of the health of the structure to rapidly identify and detect such known events, thus being the mentioned detection as accurate as needed. Also, through continuous tracking on the structure health, minor problems can be

- easily detected before they become a major problem and
- corrected by means of minor adjustments.

This has a direct impact on the overall cost of maintenance, which is drastically reduced when it is compared to the cost of standard regular maintenance which disregards the health of the particular component and applies a "general recipe". Moreover, this standard regular maintenance normally overlooks residual lifetimes of components of the structure.

By means of the system according to the invention, a personalized maintenance is achieved for each particular structure according to the particular behaviour of the components thereof. Thus, scheduled stops in the operation of the structure in order to perform maintenance tasks may be unnecessary, or at least highly reduced, since the health of the components is already known and the mentioned stops may be clearly avoided by the output of the present system.

Preferably, the at least one sensor of the system is one of the following types:

- contact, such as an accelerometer,
- optic,
- thermic,
- humidity,
- sound pressure,
- electric,
- magnetic, or
- IR

sensor.

Advantageously, this allows the system to acquire data of different fields or categories, thus allowing the system to detect known events of various types by means of the same data analysis module and one or more mathematical models related to them.

This is of special application in those structures with components comprised in mechanisms, or for components exposed to extreme working environments.

In a particular embodiment, at least one sensor is an accelerometer adapted to acquire frequency and amplitude data according to the vibrations of the structure.

Advantageously, this focuses the health of the component/s on frequency patterns within the vibration spectrum. Besides, this provides information about the vibration patterns of the components. This is of special application for components such as engine rotors, bearings or supports thereof.

This may allow detecting events as exceedances or unbalance in engine rotors.

Therefore, this particular embodiment is of special interest for Auxiliary Power Units or engines of the aircraft.

In a particular embodiment, the system further comprises recording means adapted to save the data acquired by the at least one sensor. This allows the data analysis module to provide a detection of event based on data which has been acquired before or to re-evaluate possible events based on said data.

Advantageously, in the breakdown of the structure by any reason, a back-up saved data may be of special interest to identify a new event related with a failure which were previously unrelated.

In a preferred embodiment of the invention, the recording means is a computer-readable storage medium or a data carrier.

In a particular embodiment, the data analysis module comprises means for pre-processing the acquired data by the at least one sensor with Digital Signal Processing techniques. Said techniques are for example Fourier Transform, wavelet Transform, or denoising.

The pre-processing allows the comparison and evaluation performed by the data analysis module to be easier, given that the data to be evaluated is already considered in the most accurate way to be introduced as an entry into the corresponding mathematical model.

It is to be observed that the pre-processing means are preferably additional mathematical operators and mathematical elements stored in the database. Therefore, additional calculations are to be performed in the mathematical model.

In a particular embodiment, the warning means are configured to produce at least one of the following warning signals:

- sound signal,
- visual signal, or
- electrical signal for a remote system.

The warning means allow the system to alert a user which operates the structure that some component is not working as expected in order to take suitable measures, if needed. In principle, this is achieved by sound and visual signals which may be easier to identify by users such as the crew or operators.

Otherwise, in electronic systems, the user is a controller that may also be suitably reported by electrical signals with updated information about the behaviour of any component to harmonize and optimize the overall operation, maximizing efficiency. Nevertheless, electrical signals may also be reported to crew or remote operators of the system being afterwards shown in a display, for instance.

In a particular embodiment, the present system is adapted to be used in an aircraft comprising an aeronautical structure.

It is to be understood that the aircraft comprises the aeronautical structure and the at least one sensor located thereon. However, the data analysis module and/or the warning means may be placed either also onboard on the aircraft or placed remotely.

Advantageously, in view of the economic drawback stressed in the State of Art about replacing components with a remaining lifetime in order to comply with the maintenance schedule, this system allows a better control of the components health. Therefore, it allows the settle of a "dynamic" maintenance routine taking into consideration the actual health or remaining lifetime of components up to reach their pre-established limits.

The actual health or remaining lifetime of a component is counted as the actual alteration in its expected behaviour.

In a particular embodiment, the evaluation of the acquired data and detection of the event is performed in real time, i.e, being the acquired data performed as live data.

Therefore, mathematical elements and/or mathematical operators of the mathematical model are automatically adjusted by the data analysis module in the training phase, wherein entries are introduced in the data analysis module which provide acknowledged results and allow the definition of accurate elements which validate the corresponding mathematical model with every precise event.

Advantageously, the system may be continuously updated thus improving the database with the corresponding behaviour of the component in every instant.

Besides, as the existence of any event is continuously checked by the evaluation process, a close control of the health component is achieved in order to immediately send an alert to the user.

In a second inventive aspect, the invention provides an assembly comprising:

- a structure, in turn comprising at least a component, and
- a system according to any of the embodiments of the first inventive aspect.

In a particular embodiment, the structure is an aeronautical structure, preferably an aeronautical structure on-boarded on an aircraft.

This allows a better control of the health or remaining lifetime of the components in the structure in order to perform maintenance tasks in an optimized manner. It also allows the avoidance of unnecessary stops of aircraft which drastically reduces its exploitation. As an example, stops may be any type of groundings such as overhaul, long-term or short-term maintenance tasks.

In a particular embodiment, the warning means are located in an aircraft, particularly in the pilot cabin.

Advantageously, this allows a quicker identification of an event by the pilot - *user* - in order to take necessary measures, if needed. Ultimately, this may mitigate the propagation of possible failures through components by identifying the origin at the very beginning.

In a particular embodiment, the data analysis module is located in an aircraft, and it is additionally adapted to receive data from the at least one sensor by means of wiring.

In a particular embodiment, the data analysis module is on-ground and is adapted to receive data from the at least one sensor by means of wireless communication.

Due to sizing issues, frequently it is not possible to get on board additional equipment (which should be further certified by standard rules). Therefore, this solution overcomes the need of a physical connection between them, which mostly deals with weight and occupation issues.

In addition, it is likely to use more advanced equipment on-ground rather than on-board equipment, as there is no barrier regarding the certification. As a collateral advantage, double checking safety measure may be achieved because the system is supervised both on-ground and on-board.

In a particular embodiment, the data analysis module is adapted to notify the warning means the detection of an event by means of wireless communication.

This allows the spreading of the alert to a set of users. Particularly, this may allow informing different intended users according to the event detected. In this sense, the data analysis module acts as a communication source sending the proper information to one or various intended receivers -*users*-.

In a particular embodiment, the recording means are located in an aircraft.

Advantageously, this allows saving the data as it is acquired so that the data analysis module does not have to access the data immediately. Also, this allows a backup memory of the acquired data.

In a third inventive aspect, the invention provides a method for detecting an event in a structure, the structure in turn comprising at least a component, wherein an event is any alteration in the expected behaviour of a component, the method comprising the following steps:

> a) providing a system according to any of the embodiments of the first inventive aspect and a structure in turn comprising at least a component, or an assembly any of the embodiments of the second inventive aspect,
> b) locating at least one sensor in the structure for acquiring data of said structure,
> c) providing the acquired data to the data analysis module,
> d) evaluating by means of the data analysis module the acquired data in terms of the known events present in the database,
> e) providing an output, which corresponds to a detected event when the evaluated data corresponds to a known event hosted in the database, and
> f) informing the user of the detected event by means of the warning means.

In a preferred embodiment, the method further comprises in step e) providing also a percentage of certainty of output provided in said step e).

All the features described in this specification (including the claims, description and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

| | |
|---|---|
| Figures 1a-1c | These figures show different architectures according to different embodiments of the system according to the invention. |
| Figure 2 | This figure shows a deviation of the behaviour of a component, settled as having exceeded a pre-established limit, according to the prior art. |
| Figure 3a-3b | These figures show data acquired by the sensor of a system according to the invention, said acquisition being performed in raw. |
| Figures 4a-4b | These figures show the data acquired shown in figure 3a once pre-processed with Digital Signal Processing techniques. |
| Figure 5 | This figure shows an example of a training phase according to the data acquired as shown in figure 3a. |
| Figure 6 | This figure shows a flowchart describing an embodiment of a method for detecting an event in a structure according to the invention. |

## DETAILED DESCRIPTION OF THE INVENTION

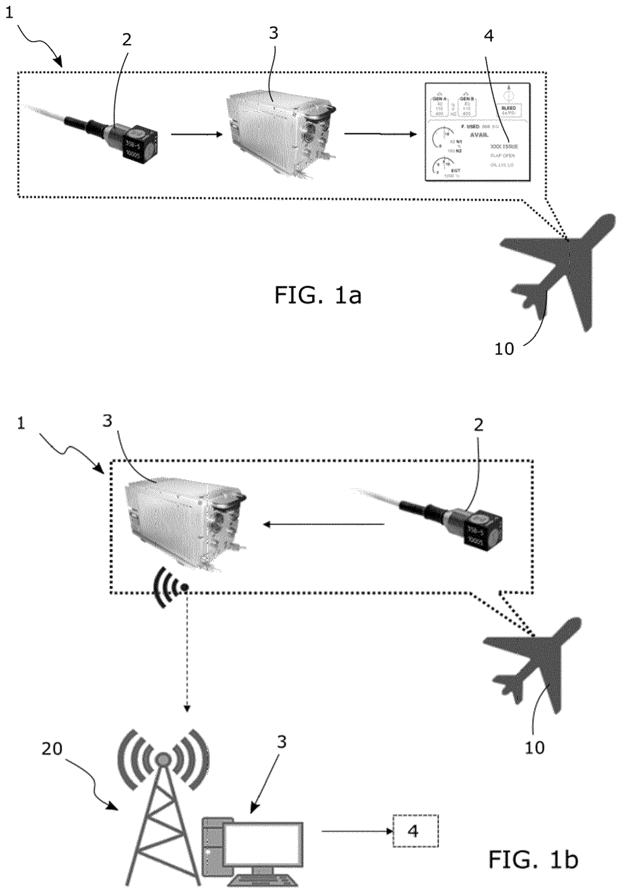

Figures 1a to 1c show a set of different architectures according to different embodiments of the system (1) according to the invention. In particular, figure 1a depicts a first embodiment of the present system (1) on-boarded on an aircraft (10).
The system (1) is adapted to detect an event in at least one structure of the aircraft (10) mounted therein. Such structure comprises at least one component, for example an engine, or a valve, whose altered behaviour from what is expected is considered as an event. As the system (1) is on-boarded on an aircraft (1), one or more sensors (2) are located along with such structure in order to acquire data therefrom.

The on-boarded data analysis module (3) is connected to the sensor (2), which is in turn located on the aeronautical structure of the aircraft, to receive the acquired data. Then, such data acquired is processed by the data analysis module (3) and, in case an event is detected, warning means (4) such as a display or snooze, on-boarded as well, are configured to inform afterwards a user of such detected event.
Preferably, the warning means (4) are suitable for alerting the user in the cockpit of the aircraft (10). This alert is configured by any warning signal, such as sound, visual or a combination thereof. Also, electrical signal are envisaged to switch on particular backup equipment.
Preferably, unless an event is detected, the warning means (4) are configured not to inform the user.
In addition, the system (1) entirely on-boarded may comprise recording means (5) which allow saving acquired data as back-up data.
Throughout this first embodiment of the system (1) entirely on-boarded on the aircraft (10), all connections are preferably wiring connections.
Figure 1b depicts a second embodiment of the present system (1) partially on-boarded on an aircraft (10) and partially envisaged to be on-ground. In the simplest example, the sensor (2) will be on-boarded, whilst the data analysis module (3) and the warning means (4) to inform about an event will be on-ground.
Preferably, the system (1) comprises recording means (5) on-boarded in the aircraft (10), which save the acquired data from the structure.
Therefore, said acquired data can be

- sent to a data analysis module (3) settled in a base station (20) on-ground by means of wireless communication, and/or
- saved in a physical recording means (5) and evaluated in a deferred manner afterwards.

The at least one sensor (2) and the recording means (5) both located on the structure are connected by wiring. Thus, the acquired data may be

- sent to the data analysis module (3) of the on-ground location (20), as well as
- kept by the recording means (5), and/or
- just saved and physically transported to said data analysis module (3) of the on-ground location (20).

Once the data analysis module (3) performs the evaluation with the received acquired data and eventually detects an event, the warning means (4) inform accordingly. Communication between both elements is preferably achieved by wiring on-ground. Also, the intended user may be any user in charge of assuring the structure operation.

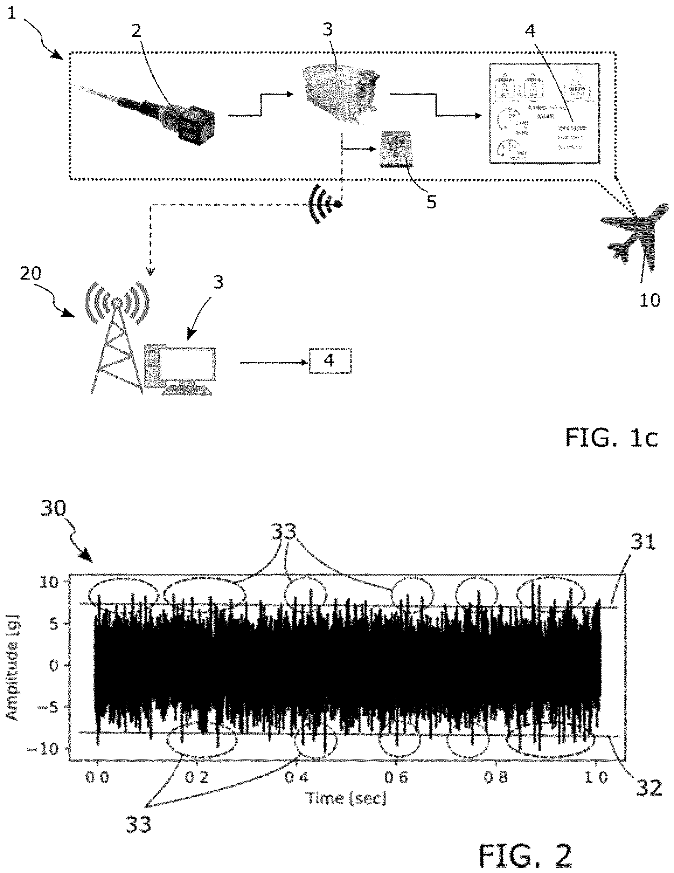

Figure 1c depicts a third embodiment of the present system (1) partially on-boarded on an aircraft (10) and partially on-ground, as a further example of the system (1) described in the second embodiment.

As it can be seen, the sensor (2) is located on the structure thus on-boarded on the aircraft (10). Likewise, the data analysis module (3) is on-boarded on the aircraft, and may be coupled to recording means (5) which provide with a back-up memory. Further on the airborne end, the system (1) comprises warning means (4) to inform the user of an eventual detection of an event.

On the on-ground end, the system (1) comprises an additional data analysis module (3) and additional warning means (4) which evaluate the received data from the airborne end and eventually inform of a detected event, respectively.

Therefore, said data acquired from the structure can be processed and evaluated entirely by either the airborne data analysis module (3), or by the additional data analysis module (3) on-ground, or by a combination thereof. Additionally, both data analysis modules (3) can evaluate the acquired data in real time and/or deferred.

Particularly in this embodiment, one of the data analysis modules (3) comprises means for pre-processing the acquired data by the sensor (2) with Digital Signal Processing techniques, while the other evaluates said pre-processed data in order to detect an event.

Both data analysis modules (3) can communicate between them by means of wireless communication. Thus, the data analysis module (3) on-ground is configured to receive data sent from the data analysis module (3) on-boarded on the aircraft (10).

Figure 2 shows how prior art settles a deviation in the behaviour of a component. In this example, a graph displaying the amplitude *versus* time is shown for a given operational condition of a structure. This data (30) has been acquired from a sensor (2), particularly from an accelerometer.

Hereinafter, an accelerometer should be understood as a device that measures proper acceleration of a structure. Since an accelerometer has multiple applications widely across many different technical fields, it has been used to exemplify the prior art. Among others, applications of accelerometers may be navigation systems for aircraft and missiles, rotatory machinery, tablet computers and digital cameras so that images on screens are always displayed upright, flight stabilization of drones, etc.

Further, accelerometers measure vibration in the horizontal, vertical and axial direction on both the inboard and outboard motor parts. Aside from typical mechanical issues, such as misaligned couplings and unbalance, a vibration analysis can also identify electrical issues that cause mechanical vibrations. Some common electrical faults include air gap variation, broken rotor bars and bearing fluting.

Therefore, the graph shown in figure 2 should be considered a common example of prior art. The vibration amplitude is the characteristic which quantifies the severity of the vibration, in this case an acquired data (30) in the form of vibration in G units ("G" being equal to the acceleration from gravity, *i.e. 9.8m/s²*) over time (t) is shown.

Additionally, in this graph upper (31) and lower (32) limits can be observed related to given levels of G's in the accelerometer. Particularly, those limits act as a pre-established limit in peak-to-peak value of vibration. Nevertheless, a skilled person may use any other values such as peak *per se,* average or RMS values.

Peak-to-peak value indicates the maximum excursion of the wave, a useful quantity where, for example, the vibratory displacement of a structure or a component thereof, is critical for maximum stress or mechanical clearance considerations, thus being a representative value of the health of a structure or component.

Therefore, a deviation in the state of the art for the expected behaviour of a component is settled at the point where the vibration values are out of a certain pre-established range (31, 32). Examples of such surpassing (33) in the vibration values are pointed out in figure 2.

However, possible minor deviations which do not exceed the pre-established limits (31, 32) imply a component operation departing from what it is expected, but as no surpassing (33) is noted, it is considered that said component still has an acceptable behavior according to the threshold settled by the mentioned pre-established limits (31, 32). This possible failure will only be noticed when the behaviour of the component is affected such that it surpasses said pre-established limits (31, 32), whilst it will remain unnoticed until then.

Hereinafter, the same situation of acquisition of data from an accelerometer located on an aeronautical structure will be shown in order to better represent the improvements of the present invention over the prior art.

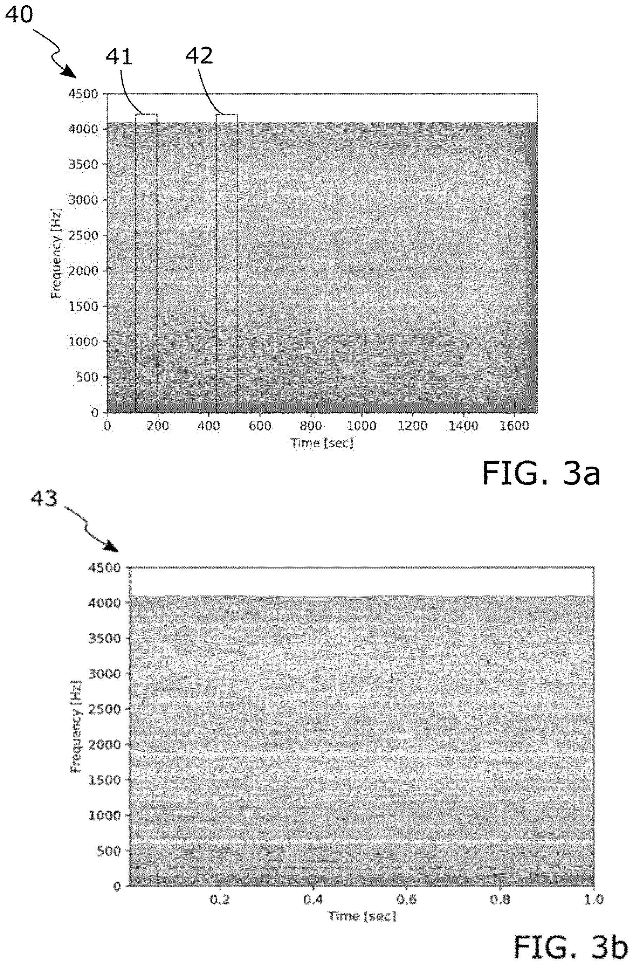

Figure 3a shows data acquired (40) by a sensor (2) in a raw manner, according to the present embodiment of the invention. Particularly, the raw data acquired (40) by the sensor (2) is depicted as a *specgram* performed over an accelerometer measurement, *i.e.* a 3D graph wherein the abscissa axis is identified with time ("sec"), the ordinate axis is identified with frequency ("Hz"), and the z-axis is identified with the amplitude of the vibration. Also, the minor to major amplitude values in z-axis are identified with a gradient from the lightest to the darkest colour tones.

It is to be noted that two vibration patterns have been pointed out in figure 3a, that is, two strips of the mentioned *specgram* surrounded by vertical boxes (41, 42). Those different vibration patterns or boxes (41, 42) establish that at least two different operation conditions took place at the time the sensor (2) acquired such data (40).

Particularly, the strips surrounded by vertical boxes (41, 42) are a part of their respective vibration patterns.

Figure 3a shows the data acquired (40) by the sensor (2), i.e. the accelerometer, as an entry of information to be processed by the data analysis module (3).

Nevertheless, this data acquired by the sensor (2) can be pre-processed with Digital Signal Processing techniques, such as Fourier Transform, wavelet Transform, denoising, or the like.

It is highly recommended to pre-process the data acquired (40) in short time slices as for example one (1) second, in order to economize computational resources. This is of special application in case the data module analysis is on-boarded in the aircraft. Figure 3b shows a time-slice (43) of one (1) second extracted from the data of figure 3a.

Nevertheless, a skilled person should recognize that the size of the slice depends on what it is looked for (e.g. to detect an event related to an oscillation that takes place every 10 seconds, the slice should be at least bigger than that).

Therefore, it should be understood that before pre-processing the acquired raw data (40), a step of splitting the same into several time-slice samples (43) is performed.

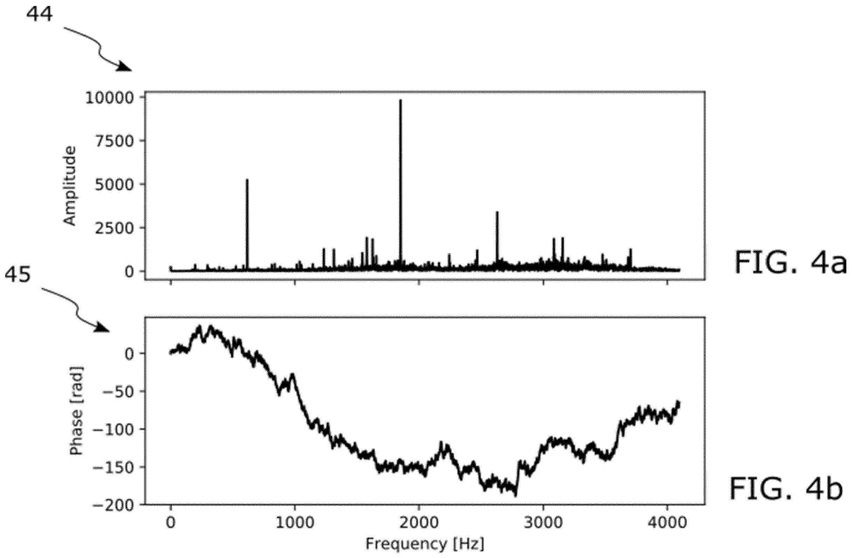

As an example, figures 4a and 4b show the data acquired (43) as shown in figure 3b, already pre-processed (44, 45) with a Fourier Transform technique. Accordingly, figures 4a and 4b show amplitude and phase (*"rad"*, radians) *versus* frequency ("*Hz*"), respectively, as a result of such Fourier Transform.

Such acquired data, either pre-processed (44, 45) or raw (40, 43), is the entry to be received by the data analysis module (3) in order to be processed afterwards.

$(\vec{X})$ is the entry, measured by the sensor (2) and introduced into the data analysis module (3), which in this embodiment is in the form of a 2x1 vector:

$$\vec{X} = \begin{bmatrix} x_1 \\ x_2 \end{bmatrix}$$

Said entry $(\vec{X})$ is evaluated by the data analysis module (3), in order to detect an event related with the monitored structure, or a component thereof. The data analysis module (3) comprises mathematical models for mathematically processing such entry.

For example, considering a linear mathematical model such as $y = W \cdot x + b$, 'W, b' are considered mathematical elements and '·, +' mathematical operators. As the entry $(\vec{X})$ is in form of a 2x1 vector, the mathematical elements in this embodiment are the following:

$$\overline{W} = \begin{bmatrix} w_{11} & w_{12} \\ w_{21} & w_{22} \end{bmatrix} \qquad \vec{b} = \begin{bmatrix} b_1 \\ b_2 \end{bmatrix}$$

These specific mathematical operators and mathematical elements are stored in the database, and are applied (in the form of this particular mathematical model specified for at least one event) to the entry in order to perform a comparison.

As a consequence, according to a given entry $(\vec{X})$ into the data analysis module, a particular result $(\vec{y})$ will be provided by the mathematical model. Such result $(\vec{y})$ will be afterwards discerned in order to recognize or detect an event as a distinct result $(\vec{y})$ from what is expected to be.

This is to say, as the database of the data analysis module (3) hosts known events, each related with a particular alteration in the expected behavior of a component, those known events are identified with particular results $(\vec{y})$ provided by the mathematical model.

For example, in the graph of figure 3a, each vibration pattern, entered as different entries $(\vec{X_1}, \vec{X_2})$ in the mathematical model, provide different results $(\vec{y_1}, \vec{y_2})$ in the comparison. Such results $(\vec{y_1}, \vec{y_2})$ are discretized as outputs in the evaluation process in order to correlate the result with a known event. If any of such results is already related to a known event, in the evaluation process such result is also related to the fact that the same event has been detected. Therefore, the evaluation process is to be understood as relating said result with the detection of an event. This is how the operations of comparing and evaluating, performed by the data analysis module (3), are related to results and outputs of the model and system (1) respectively.

As can be easily seen, the present system (1) is trained to detect events from different patterns in the acquisition by a correlation with known events or structure operating conditions.

As an example, if the expected behaviour of a valve *-component-* is to work full opened (100% flow capacity), an event should be considered as the valve (in the same working conditions) is working partially closed (e.g. 93% flow capacity) therefore giving rise to an alteration in its expected behaviour.

The expected behaviour of the valve is identified in figure 3a as the first vibration pattern (100% flow capacity), whilst the second vibration pattern will provide a result in the data analysis module related to an output with the detection of an event *i.e.* the valve is working at 93% flow capacity.

Therefore, the system (1) is trained previously for detecting events, such as the working of said valve partially closed (*e.g.* 93% flow capacity), according to acquired data related to a component whose expected behaviour is acknowledged as altered. In this training phase said data related to components whose expected behaviour is acknowledged as altered is used to identify and categorize events as known events.

Advantageously, this system (1) allows the detection of issues (identified as events) that current state of the art would leave unnoticed. As it was discussed previously, this can lead to preventive maintenance actions (or crew actions if the detection is performed onboard) taking into account the actual health of the component. Detecting potential issues before they take place results in time and costs savings, given that a component is no longer replaced before it fails and cause further damage.

In a further development of the system (1), the output provided by the data analysis module (3) in the evaluation step comes along with a percentage of certainty of the detected event, should there be any.

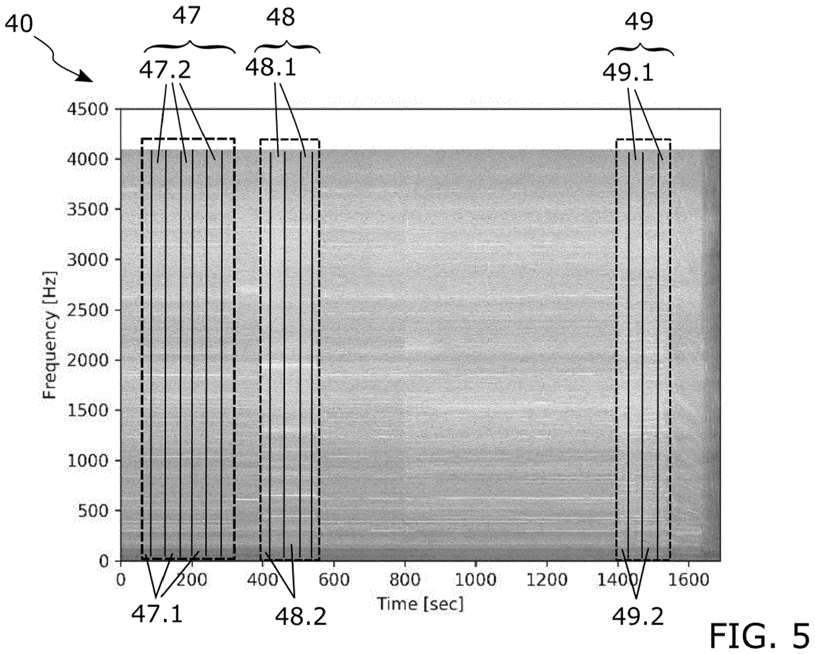

Figure 5 shows an example of a graph used in the training phase according to the data shown in figure 3a. As it was already stated, the mathematical model is adjusted by the data analysis module in the training phase in order to better detect events, or being capable to detect other events.

Firstly, it is presumed that the vibration graph (40) comprises known events, already identified during the acquisition of data by the sensor (2). For example, it may be known that at a particular time of the structure operation (or a component operation), a particular event took place and therefore that time slice of acquired data should be used for correlation with a known event.

At this point, the data acquired (40) may be used either for tuning-up the mathematical model to better predict the already considered and hosted known events, or to detect new events before left unnoticed (according to the methods of the state of the art already referred). In the embodiment shown in figure 5:

- the first (100%) (47) and second (93%) (48) vibration patterns may be used for tuning-up the mathematical model as it is related to the same known events that in the example of figure 3a, and
- the third vibration pattern (49) may be used to configure a mathematical model that takes into consideration the detection of a new event.

Therefore, the acquired data is previously properly classified as per the events required to be detected.

The data within each vibration pattern (47, 48, 49) is split into minor time slices. For each vibration pattern (47, 48, 49), a number of minor time slices configures the training group (47.1, 48.1, 49.1), whilst another number of slices configures the control group (47.2, 48.2, 49.2). This process is the *so-called* "tagging phase". It is advisable that the vibration pattern maintains stable across its entirety.

Such control group (47.2, 48.2, 49.2) assesses how good the detection of the respective event is, for what the data analysis module (3) is being trained for. In the example of figure 5, for each vibration pattern, odd minor time slices are used for the training group (47.1, 48.1, 49.1), and even minor time slices are used for the control group (47.2, 48.2, 49.2). Nevertheless, the skilled person can recognize other ways to tag the acquired data regarding the particular event for which the data analysis module (3) is being trained for.

Coming back to the mathematical example of figure 3a, the training phase may be exemplified as follows. Given the data acquired in the third vibration pattern (49), it is correlated to a known event of the valve working at 80% of its flow capacity. Therefore, a result provided by the mathematical model shall be evaluated with such event of *"valve working at 80% of flow capacity"*.

In order to better discriminate the future result ($\vec{y}$), a given result is provided such as:

$$\vec{y} = \begin{bmatrix} y_1 \\ y_2 \\ y_3 \end{bmatrix}$$

wherein $y_1$, $y_2$, and $y_3$ are already given and correlated to an event of *"valve working at 80% of flow capacity"*. Therefore, in case that the result ($\vec{y}$) provided by the mathematical model departs from the given $y_1$, $y_2$, and $y_3$, it can at least be concluded that such particular event has not been detected.

For the other known events to be detected, a different given result of $y_1$, $y_2$, and $y_3$ must be specified.

Therefore, the mathematical model stored in the database should be updated in order to be able to detect any new event, such as the mentioned one.

The entries ($\vec{X}$) related to every minor time slice of the training phase of the current vibration pattern are introduced in the data analysis module (3), which in turn provides the former given result ($\vec{y}$).

Therefore, with the constraints of the entries ($\vec{X}$) corresponding to a particular known event and the given result ($\vec{y}$), a combination of mathematical elements with the mathematical operators is configured. This gives rise to the tuned-up mathematical model, which is hosted in the database of the data analysis module (3).

It is to be noted that the tuned-up mathematical model will be highly influenced by the baseline mathematical model to be used. Nevertheless, the skilled person may use different baseline mathematical models depending on the complexity and nature of the data acquired.

For example, with the linear mathematical model used above (*i.e.* $y = W \cdot x + b$), the tuned-up mathematical elements are as follows:

$$\overline{W} = \begin{bmatrix} w_{11} & w_{12} \\ w_{21} & w_{22} \\ w_{31} & w_{32} \end{bmatrix} \qquad \vec{b} = \begin{bmatrix} b_1 \\ b_2 \\ b_3 \end{bmatrix}$$

As the dimension of the entries ($\vec{X}$) shall not change (i.e. remains 2x1 in this particular example), it is to be noticed that the former dimension of the element $\overline{W}$ (i.e. 2x2) is undoubtedly raised to dimension 3x2 as a new event can be detected. Similarly, the dimension of element $\vec{b}$ will also be raised from 2x1 to 3x1 as said new event can be detected.

Once, the tuned-up mathematical model is configured, the minor time slices forming the training group are used as additional entries for validating said model with the event under consideration. Optionally, the validity of the tuned-up mathematical model may be considered as reached when obtaining a particular rate of success.

Further, for the training phase, it is also possible to use pre-processed data for the tagging phase.

As stated above, the mathematical model may be configured to provide a result which is related to an output incorporating a percentage of certainty.

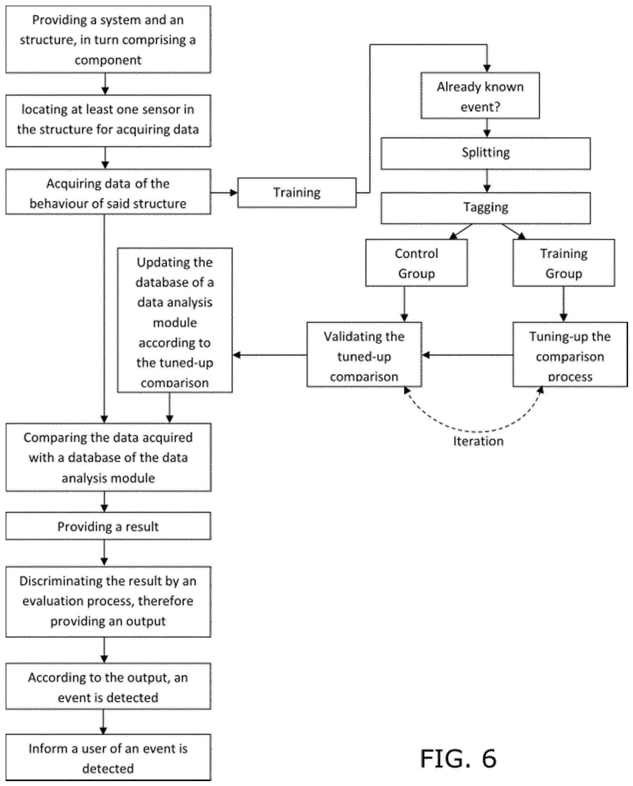

Figure 6 depicts the steps of a method for detecting an event in a monitored structure. Briefly, the steps of said method are shown as follows:

- providing a structure and a system which comprises:

  at least one sensor configured to be located on the structure to acquire data therefrom,
  a data analysis module with a database, the data analysis module receiving data from the at least one sensor, and
  warning means,

- locating the least one sensor in the structure to be monitored,
- acquiring data of the behaviour of said structure, and providing such data $(\vec{X})$ to the data analysis module,
- comparing the acquired data with known events hosted in the database of the data analysis module,
- providing a result $(\vec{y})$ of the mentioned comparison,
- evaluating such result by discrimination, providing an output thereby,
- detecting an event according to such output, and
- informing the user of the detected event by means of the warning means.

As it was already stated, in parallel to the acquisition of data from the structure, a training phase may take place to tune-up the comparison between the data acquired and the known events hosted in the database of the data analysis module.

Therefore, in this training phase, between the steps of acquiring data and comparing said acquired data, the method further comprises the steps of:

  i. splitting the interval of acquired data, wherein a known event occurs, into data-slices,
  ii. tagging said slices into a training group and a control group,
  iii. tuning-up the database of the data analysis module hosting known events in order to obtain a more accurate comparison between the data and the known events therein,
  iv. validating the tuned-up comparison by the data-slices of the control group, and
  v. updating the database of the data analysis module hosting known events.

Figure 6 also depicts in dashed-line arrows that iteration between the steps of tuning-up the database and its later validation takes place, until a particular stop condition is reached.

The data acquired used in the training phase may be used either for tuning-up the database of the data analysis module either to better predict already hosted known events, or to detect new events.

**Claims**

1. System (1) adapted to detect an event in a structure, the structure in turn comprising at least a component, wherein an event is any alteration in the expected behaviour of a component, the system (1) comprising:

   - at least one sensor (2) configured to be located on the structure, the sensor (2) adapted to acquire data from the structure,
   - a data analysis module configured to receive data from the at least one sensor (2), wherein the data analysis module comprises a database hosting known events, each known event related with a particular alteration in the expected behaviour of a component, and
   - warning means,

   wherein the data analysis module is configured to evaluate the acquired data received from the at least one sensor (2), the evaluation being performed by comparison with the known events hosted in the database, and detect an event according to the performed evaluation, and
   wherein the warning means are configured to inform a user of the detected event.

2. System (1) according to claim 1, wherein the system (1) further comprises recording means adapted to save the data acquired by the at least one sensor (2).

3. System (1) according to any of the preceding claims, wherein the data analysis module (3) comprises means for pre-processing the acquired data by the at least one sensor (2) with Digital Signal Processing techniques.

4. System (1) according to any of the preceding claims, wherein the at least one sensor (2) is one of the following types:

   - contact, such as an accelerometer,
   - optic,
   - thermic,
   - humidity,
   - sound pressure,
   - electric,
   - magnetic, or

- IR

sensor (2).

5. System (1) according to any of the preceding claims, wherein the warning means are configured to produce at least one of the following warning signals:

   - sound signal,
   - visual signal, or
   - electrical signal for a remote system (1).

6. System (1) according to any of the preceding claims, wherein at least one sensor (2) is an accelerometer adapted to acquire frequency and amplitude data according to the vibrations of the structure.

7. System (1) according to any of the preceding claims, for use in an aircraft comprising an aeronautical structure.

8. System (1) according to any of the preceding claims, wherein the evaluation of the acquired data and detection of the event is performed in real time.

9. Assembly comprising:

   - a structure, in turn comprising at least a component, and
   - a system (1) according to any of claims 1 to 8.

10. Assembly according to the preceding claim, wherein the structure is an aeronautical structure, preferably an aeronautical structure on-boarded of an aircraft.

11. Assembly according to any of claims 9 or 10, wherein the warning means are located in an aircraft, particularly in the cockpit.

12. Assembly according to any of claims 9 to 11, wherein the data analysis module (3) is located in an aircraft, and wherein it is additionally adapted to receive data from the at least one sensor (2) by means of wiring.

13. Assembly according to any of claims 9 to 12, wherein the data analysis module (3) is on-ground and is adapted to receive data from the at least one sensor (2) by means of wireless communication.

14. Assembly according to any of claims 9 to 13, wherein the data analysis module (3) is adapted to notify the warning means the detection of an event by means of wireless communication.

15. Assembly according to any of claims 9 to 14, wherein the recording means are located in an aircraft.

16. Method for detecting an event in a structure, the structure in turn comprising at least a component, wherein an event is any alteration in the expected behaviour of a component, the method comprising the following steps:

   a) providing a system (1) according to any of claims 1 to 8 and a structure in turn comprising at least a component, or an assembly according to claim 9,
   b) locating at least one sensor (2) in the structure for acquiring data of said structure,
   c) providing the acquired data to the data analysis module (3),
   d) evaluating by means of the data analysis module (3) the acquired data in terms of the known events present in the database,
   e) providing an output, which corresponds to a detected event when the evaluated data corresponds to a known event hosted in the database, and
   f) informing the user of the detected event by means of the warning means.

17. Method for detecting an event according to claim 16, wherein the method further comprises in step e): providing also a percentage of certainty of the output provided in said step e).

FIG. 1a

FIG. 1b

FIG. 1c

FIG. 2

FIG. 3a

FIG. 3b

FIG. 4a

FIG. 4b

FIG. 5

FIG. 6

Europäisches
Patentamt

European
Patent Office

Office européen
des brevets

# EUROPEAN SEARCH REPORT

**Application Number**

EP 18 38 2177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/053774 A1 (GE INTELLIGENT PLATFORMS INC [US]) 16 April 2015 (2015-04-16) * abstract; figure 1B * * paragraph [0001] - paragraph [0009] * * paragraph [0016] - paragraph [0060] * ----- | 1-17 | INV. G05B23/02 |
| X | EP 1 914 638 A1 (BP OIL INT [GB]) 23 April 2008 (2008-04-23) | 1,16 | |
| A | * paragraph [0002] * * paragraph [0030] * ----- | 5 | |

**TECHNICAL FIELDS SEARCHED (IPC)**

G05B

The present search report has been drawn up for all claims

| Place of search | Date of completion of the search | Examiner |
|---|---|---|
| Munich | 17 September 2018 | Kuntz, Jean-Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                    

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 38 2177

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2018

| Patent document cited in search report | | Publication date | Patent family member(s) | | Publication date |
|---|---|---|---|---|---|
| WO 2015053774 | A1 | 16-04-2015 | EP | 3055747 A1 | 17-08-2016 |
| | | | US | 2016239756 A1 | 18-08-2016 |
| | | | WO | 2015053774 A1 | 16-04-2015 |
| EP 1914638 | A1 | 23-04-2008 | AT | 491185 T | 15-12-2010 |
| | | | AU | 2007311652 A1 | 24-04-2008 |
| | | | EP | 1914638 A1 | 23-04-2008 |
| | | | EP | 2074529 A1 | 01-07-2009 |
| | | | ES | 2357581 T3 | 27-04-2011 |
| | | | US | 2010036529 A1 | 11-02-2010 |
| | | | WO | 2008047098 A1 | 24-04-2008 |

EPO FORM P0459

For more details about this annex : see Official Journal of the European Patent Office, No. 12/82